(19) Europäisches Patentamt
European Patent Office
Office européen des brevets

(11) **EP 2 693 400 B1**

(12) **EUROPÄISCHE PATENTSCHRIFT**

(45) Veröffentlichungstag und Bekanntmachung des Hinweises auf die Patenterteilung:
**18.12.2019 Patentblatt 2019/51**

(51) Int Cl.:
***G06T 7/00*** *(2017.01)*

(21) Anmeldenummer: **13165470.9**

(22) Anmeldetag: **26.04.2013**

(54) **Automatische Detektion eines Pektoralmuskels**

Automatic detection of a pectoral muscle

Détection automatique d'un muscle pectoral

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2012 EP 12178703**

(43) Veröffentlichungstag der Anmeldung:
**05.02.2014 Patentblatt 2014/06**

(73) Patentinhaber: **Siemens Healthcare GmbH 91052 Erlangen (DE)**

(72) Erfinder:
• **Ghesu, Florin Cristian**
**91058 Erlangen (DE)**
• **Jerebko, Anna**
**91052 Erlangen (DE)**
• **Kelm, Michael**
**91052 Erlangen (DE)**
• **Sühling, Michael**
**91052 Erlangen (DE)**
• **Wels, Michael**
**96047 Bamberg (DE)**

(56) Entgegenhaltungen:
**WO-A1-98/43201**

• **WEIDONG XU ET AL: "A Novel Pectoral Muscle Segmentation Algorithm Based on Polyline Fitting and Elastic Thread Approaching", PROCEEDINGS OF ICBBE 2007, IEEE, PISCATAWAY, NJ, USA, 1. Juli 2007 (2007-07-01), Seiten 837-840, XP031116187, ISBN: 978-1-4244-1120-7**
• **BORGES R A ET AL: "Automatic Identification of the Pectoral Muscle in Mammograms", IEEE TRANSACTIONS ON MEDICAL IMAGING, IEEE SERVICE CENTER, PISCATAWAY, NJ, US, Bd. 23, Nr. 2, 1. Februar 2004 (2004-02-01), Seiten 232-245, XP011106357, ISSN: 0278-0062, DOI: 10.1109/TMI.2003.823062**
• **MYUNGEUN LEE ET AL: "Segmentation of the Pectoral Muscle Boundary in Breast MR Images", BIOINFORMATICS AND BIOENGINEERING (BIBE), 2011 IEEE 11TH INTERNATIONAL CONFERENCE ON, IEEE, 24. Oktober 2011 (2011-10-24), Seiten 323-326, XP032029229, DOI: 10.1109/BIBE.2011.60 ISBN: 978-1-61284-975-1**
• **SUCKLING J ET AL: "SEGMENTATION OF MAMMOGRAMS USING MULTIPLE LINKED SELF-ORGANIZING NEURAL NETWORKS", MEDICAL PHYSICS, AIP, MELVILLE, NY, US, Bd. 22, Nr. 2, 1. Februar 1995 (1995-02-01), Seiten 145-152, XP002912080, ISSN: 0094-2405, DOI: 10.1118/1.597464**

EP 2 693 400 B1

**Beschreibung**

Die vorliegende Erfindung betrifft ein Verfahren zur automatischen Detektion eines menschlichen Pektoralmuskels in medizintechnischen Brust-Aufnahmedaten eines Patienten. Sie betrifft zudem ein Detektionssystem zur automatischen Detektion eines menschlichen Pektoralmuskels in medizintechnischen Brust-Aufnahmedaten eines Patienten.

Medizintechnische Brustaufnahmen werden insbesondere bei der Brustkrebs-(Früh-)Diagnose verwendet. Eine relative neue Entwicklung bei Bildgebungssystem in diesem Zusammenhang stellt die digitale Brust-Tomosynthese (Englisch: digital breast tomosynthesis - DBT) dar, eine Form der dreidimensionalen (3D-) Bildaufnahme, die zunehmend die zweidimensionalen (2D-) Bildaufnahmen der Mammographie ersetzt. Diese 3D-(Volumen-) Bildaufnahmen der komprimierten Brust werden aus mehreren 2D-Projektionen rekonstruiert, die aus unterschiedlichen Aufnahmepositionen, d.h. unterschiedlichen Aufnahmewinkeln akquiriert werden. Da mithilfe der DBT deutlich differenziertere Diagnosen ermöglicht werden als bei der Mammographie, ist es derzeit das Ziel, die DBT auch für Früherkennungsuntersuchungen einzusetzen. Insbesondere kann die DBT als 3D-Anwendung konkretere Hinweise auf die Position einer Auffälligkeit innerhalb einer menschlichen Brust ermöglichen als eine 2D-Anwendung.

Sowohl bei der Mammographie als auch bei der DBT wird die Brust in bestimmten, standardisierten Positionen, d.h. aus Standard-Richtungen, gequetscht, also komprimiert und dann eine Bildakquisition durchgeführt. Dabei unterscheidet man zwischen einer kraniokaudalen (Englisch: craniocaudal - CC) Bildakquisition, bei der die Brust in der Fuß-Kopf Richtung des Patienten komprimiert wird und einer mediolateral schrägen (Englisch: mediolateral-oblique - MLO) Bildakquisition, bei der die Kompression um 45° (nach links oder rechts, je nach abzubildender Brust) gedreht im Vergleich zur CC-Bildakquisition durchgeführt wird.

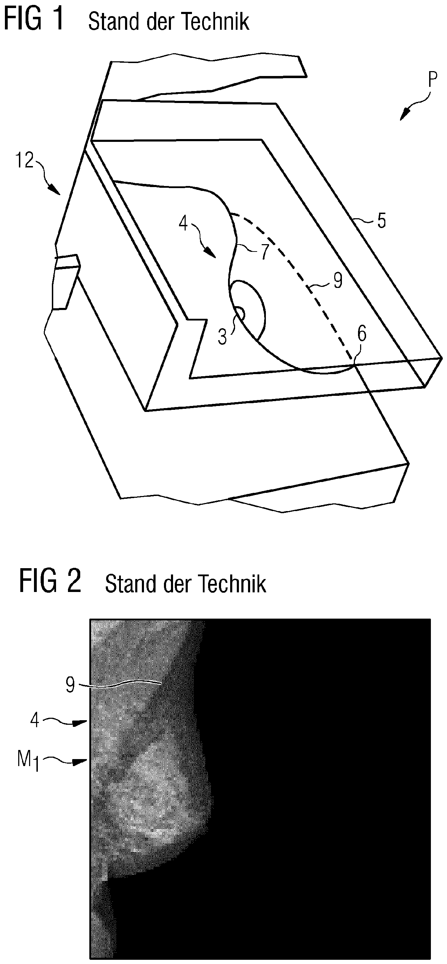

Figur 1 stellt eine Mammographie-Einrichtung 12 dar, wie sie in der medizinischen Praxis zur Erzeugung von Bilddaten einer Brust 4 einer Patientin P üblich ist. Im Folgenden wird der Einfachheit halber allgemein von einem Patienten P gesprochen, da Brustaufnahmen entgegen der öffentlichen Wahrnehmung sowohl von Männern wie von Frauen generiert werden.

Insbesondere werden derartige Mammographie-Einrichtungen 12 verwendet, um DBT-Bilddaten zu generieren. Die Brust 4 wird dabei durch einen mechanischen Mechanismus, das sog. Paddle 5, fixiert und komprimiert. Die Figur 1 zeigt dabei eine Positionierung des Patienten P in der MLO-Position. Weiterhin dargestellt sind die Papilla 3, der Brustansatz 7 und die Unterbrustfalte 6, welche in der medizinischen Praxis auch als Brustumschlagsfalte 6 bezeichnet wird. Strichliert angedeutet ist hier die Begrenzung des Pektoralmuskels 9, der als Begrenzungslinie bzw. -fläche der Brust 4 zum Rest des Körpers des Patienten P aufgefasst werden kann.

Aufgrund dieser Begrenzungsfunktion wird es angestrebt, diesen Pektoralmuskel in den Brust-Aufnahmedaten möglichst einfach von der Brust 4 selbst zu diskriminieren. Dadurch kann nämlich die Brust 4 in ihrer räumlichen Erstreckung klar erfasst werden, was im Speziellen während der Befundung, aber auch bei einem späteren chirurgischen Eingriff erhebliche Vorteile bietet: Einerseits kann hierdurch eine Annäherung für eine modellbasierte Segmentierung der Brust von umliegenden Strukturen ermöglicht werden. Zweitens dient der Pektoralmuskel als Grenze zu anderen Körperbereichen, die vergleichsweise ortsstabil und daher verlässlich ist und drittens kann er als Referenzfläche bzw. -bereich verwendet werden, von der bzw. dem beispielsweise bei einem Reporting auf Basis der Brust-Aufnahmedaten der Abstand von Auffälligkeiten wie Läsionen o.ä. innerhalb der Brust 4 vom Pektoralmuskel gemessen und angegeben werden können. Diese Funktion im Speziellen erleichtert es einem Befunder, Angaben über Positionen derartiger Auffälligkeiten zu machen, die einem Behandler, etwa einem Chirurgen, das Wiederauffinden der Auffälligkeit, etwa bei einer Entnahme vereinfachen. Viertens schließlich kann der Pektoralmuskel auch zu Registrierung unterschiedlicher Brust-Aufnahmedaten aufeinander als Referenzfläche bzw.-bereich verwendet werden.

Eine Möglichkeit, um den Pektoralmuskel in Brust-Aufnahmedaten von der Brust selber zu separieren, wird in der WO 98/43201 beschrieben. Das dort gezeigte Verfahren beruht auf der Berechnung von Gradienten-Magnituden innerhalb eines Untersuchungsbereichs der Brust-Aufnahmedaten und auf einer anschließenden Gewichtung dieser Gradienten-Magnituden sowie einer Hough-Transformation zur Detektion der Begrenzungslinie des Pektoralmuskels.
Ein ähnliches Verfahren ist aus Borges R. A. et al. bekannt: "Automatic Identification of the Pectoral Muscle in Mammograms", IEEE Transactions on Medical Imaging, IEEE Service Center, Piscataway, NJ, USA, Bd. 23, Nr. 2, 1. Februar 2004 (2004-02-01), Seiten 232-245, XP011106357, ISSN: 0278-0062, DOI: 10.1109/TMI.2003.823062. Im Gegensatz zur WO 98/43201 sieht dieses Verfahren jedoch die Verwendung von bestimmten Gabor Wavelets zur Bildanalyse vor.
Ein weiteres Verfahren wird von Weidong Xu et al. beschrieben: "A Novel Pectoral Muscle Segmentation Algorithm Based on Polyline Fitting and Elastic Thread Approaching", Proceedings of ICBBE 2007, IEEE, Piscataway, NJ, USA, 1. Juli 2007 (2007-07-01), Seiten 837-840, XP031116187, ISBN: 978-1-4244-1120-7. Darin wird ein neuartiger Algorithmus erläutert, der mittels "Polyline-Fitting" im Rahmen einer "elastic thread" Methode eine präzise Abgrenzung des Pektoralmuskels auch bei einer ungünstigen Darstellung des Pektoralmuskels in Brust-Aufnahmedaten ermöglicht.

Die zuvor genannten Verfahren haben sich in der Vergangenheit als effektiv und zuverlässig erwiesen. Allerdings ist ihre Anwendbarkeit auf 2D-Brust-Aufnahmedaten beschränkt. Daher ist eine zuverlässige Analyse von 3D-Brust-Aufnahmedaten damit nicht ohne weiteres möglich.

Der Pektoralmuskel ist derzeit nicht in allen Brust-Aufnahmedaten detektierbar, weil er beispielsweise derzeit in CC-Aufnahmen aufgrund der Kompressionsrichtung nicht mit abgebildet werden kann.

Figuren 2 bis 5 zeigen verschiedene Brust-Aufnahmen, um das Problem der Detektion des Pektoralmuskels zu verdeutlichen:

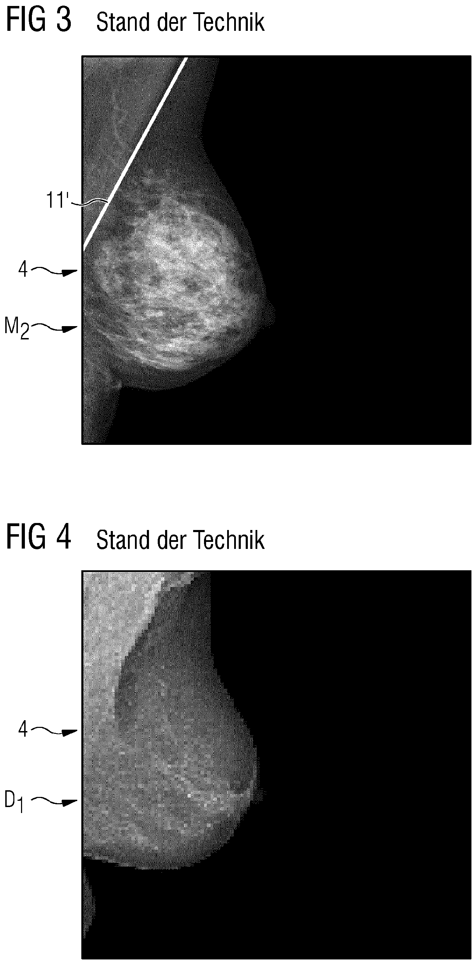

Figuren 2 und 3 zeigen mammographische Brust-Aufnahmen $M_1$, $M_2$ in MLO-Richtung. Dabei ist der Brust-Aufnahme $M_1$ in Figur 2 der Pektoralmuskel 9 zumindest im oberen Brustbereich deutlich vom Brustgewebe der Brust 4 abgesetzt durch eine hellere Bildfärbung erkennbar. Der Kontrast zwischen dem Pektoralmuskel 9 und der Brust 4 ist also vergleichsweise klar. Ähnliches gilt auch für die Brust 4 in der Brust-Aufnahme $M_2$ in Figur 3, wobei der Kontrast hier bereits etwas schwächer ausgebildet ist. In dieser Figur ist auch eine Linie 11' eingezeichnet, die eine manuell auf Basis der Bildbetrachtung eingefügte Begrenzungslinie 11' darstellt, die den Pektoralmuskel 9 repräsentiert. Dem Benutzer wird dadurch verdeutlicht, dass die Brust 4 entlang dieser Begrenzungslinie 11' endet.

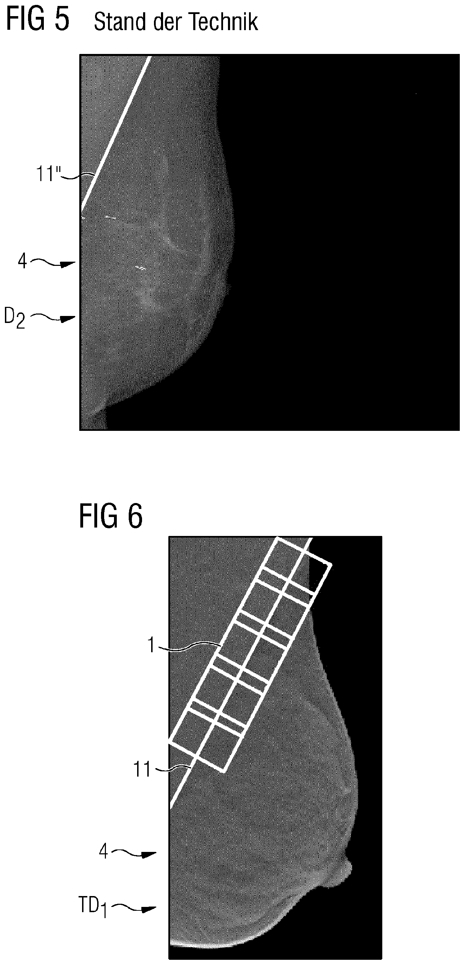

Noch weitaus schwieriger stellt sich aufgrund des weitaus geringeren Kontrasts die Detektion des Pektoralmuskels in DBT-Brust-Aufnahmen $D_1$, $D_2$ dar, wie sie in den Figuren 4 und 5 gezeigt sind. So ist zwar in der Brust-Aufnahme $D_1$ in Figur 4 im oberen Bereich scheinbar noch eine klare Helligkeitsunterscheidung möglich, doch hier verwirrt bereits der homogene Übergang im weiter unten gelegenen Bildbereich. Die Brust-Aufnahme $D_2$ Figur 5 schließlich zeigt so gut wie keinen Kontrast zwischen Brust 4 und Pektoralmuskel. Hier wurde mithilfe eines automatisierten Verfahrens gemäß dem Stand der Technik wiederum eine Begrenzungslinie 11" eingefügt.

Dieses automatisierte Verfahren gemäß dem Stand der Technik beschreibt der Artikel Karssemeijer, N.: "Automated classification of parenchymal patterns in mammograms." Phys Med Biol 43(2), Seiten 365-378. 1998. Dabei wird aus mammographischen 2D-Brust-Aufnahmedaten die Begrenzungslinie 11" mithilfe einer Hough-Transformation abgeleitet. Bei der Hough-Transformation erhalten in einem Akkumulatorfeld repräsentierte Parameterkonstellation einer Zielstruktur (hier der Pektoralmuskellinie) genau dann besonders hohe Werte, wenn diese von vielen Bildpunkten des Originalbildes gestützt werden.

Die Transformation erfolgt auf Basis der Methodik von Shapiro und Stockman in: Shapiro, Linda G. / Stockman, George C.: Computer Vision. 2001. Dabei wird für eine 2D-Gerade mit dem Winkel $\alpha$ zur x-Achse und dem Abstand R vom Koordinatenursprung der folgende Zusammenhang mit Bildpunkten an den Koordinaten x und y herangezogen:

$$R = x \cos(\alpha) + y \sin(\alpha).$$

Diese Methode hat sich für 2D-Brust-Aufnahmedaten als ziemlich effektiv und treffsicher erwiesen; sobald es jedoch darum geht, den Pektoralmuskel in 3D-Brust-Aufnahmedaten zu detektieren, stößt die Vorgehensweise von Karssemeijer für sich alleine genommen klar an ihre Grenzen. Dies gilt insbesondere für DBT-Brust-Aufnahmedaten: Die Methode liefert schlicht keine belastbaren Ergebnisse mehr.

Ein Verfahren das die Abgrenzung des Pektoralmuskels in Magnetresonanz-Aufnahmen ermöglicht, wird in Myungeun Lee et al. beschrieben: "Segmentation of the Pectoral Muscle Boundary in Breast MR Images", Bioinformatics and Bioengineering (BIBE), 2011 IEEE 11th International Conference on Bioinformatics and Bioengineering, IEEE, 24. Oktober 2011 (2011-10-24), Seiten 323-326, XP032029229, DOI: 10.1109/BIBE.2011.60, ISBN: 978-1-61284-975-1. Bei dem Verfahren wird zur Segmentierung des Pektoralmuskels ein Gradienten bezogener Strukturtensor in einem Untersuchungsbereich der Brust-Aufnahmedaten berechnet, wobei die Kontur des Pektoralmuskels vollständig und exakt detektiert wird.

Vor diesem Hintergrund ist es Aufgabe der vorliegenden Erfindung, eine alternative, vorzugsweise in ihrer Ergebnisgenauigkeit verbesserte Möglichkeit bereitzustellen, wie der Pektoralmuskel in Brust-Aufnahmedaten detektiert werden kann. Dies soll insbesondere bevorzugt automatisch, d.h. im Wesentlichen ohne Benutzer-Input während der Durchführung der Detektion erfolgen.

Diese Aufgabe wird durch ein Verfahren gemäß Anspruch 1 und durch ein Detektionssystem gemäß Anspruch 13 gelöst.

Ein Verfahren der eingangs genannten Art umfasst daher erfindungsgemäß mindestens folgende Schritte:

a) Ortsauswahl einer limitierten Anzahl von Auswahl-Kandidatenorten innerhalb der Brust-Aufnahmedaten auf Basis von bevorzugt lokalen Bildmerkmalen in den Brust-Aufnahmedaten,
b) Richtungsauswahl einer limitierten Anzahl von Auswahl-Kandidatenrichtungen an den Auswahl-Kandidatenorten zur Bildung von Kandidaten-Tupeln mit je einem Auswahl-Kandidatenort und einer Auswahl-Kandidatenrichtung,
c) Ableitung einer Repräsentationslinie und/oder Repräsentationsfläche durch Aggregation der Kandidaten-Tupel, z.B. durch Mittelung, Median-Bildung o.ä.

Die so abgeleitete Repräsentationslinie bzw.

-fläche ist analog zu verstehen zur oben erwähnten Begrenzungslinie, d. h. sie repräsentiert die Begrenzung des Pektoralmuskels zur Brust hin. Es wird also nicht der gesamte Pektoralmuskel detektiert, sondern lediglich eine Repräsentationslinie bzw. - fläche, die eben diese Begrenzung hin zur Brust repräsentiert. Dabei zeigt der Verlauf der Repräsentationslinie bzw. -fläche näherungsweise diese Begrenzung an, d. h. die Begrenzung des Pektoralmuskels wird meist nicht exakt angezeigt, sondern nur in ihrem wesentlichen Verlauf repräsentiert.

Die Repräsentationslinie bzw. -fläche kann, muss jedoch nicht zwangsläufig gerade (im Falle der Linie) bzw. eben (im Falle der Fläche) verlaufen, sondern kann auch als Kurve bzw. unebene, beispielsweise konkav und oder konvex gewölbte oder gar Kanten aufweisende Fläche (die damit aus mehreren ebenen oder kurvigen Teilflächen zusammengesetzt ist) ausgebildet sein. Allerdings ist ein gerader bzw. ebener Verlauf der Repräsentationslinie bzw. -fläche bevorzugt, da hierdurch die geometrischen Abmessungen der Brust in den Brust-Aufnahmedaten klarer angegeben werden können und zudem die Berechnung zur Ermittlung der betreffenden Linie bzw. Fläche ggf. vereinfacht werden kann.

Bei der Ortsauswahl erfolgt also eine Auswahl von bestimmten, potenziell besonders geeigneten (Kandidaten-)Orten aus einer Gesamtzahl von prinzipiell möglichen Kandidatenorten auf Basis lokaler Bildmerkmale. Diese Bildmerkmale umfassen insbesondere bevorzugt lokal vorliegende Extrema, d. h. Extrem-Messwerte, die einen bestimmten Kandidatenort von anderen, insbesondere umliegenden, Kandidatenorten hinreichend (d. h. möglichst klar) abheben. Solche Extrema umfassen insbesondere Messwertminima und/oder Messwertmaxima bestimmter Parameterwerte. Unter diese Parameterwerte fallen insbesondere lokale Schwächungswerte der durch die Brust hindurch gestrahlten (Röntgen-)Strahlung bzw. analoge Messwerte in MRT-Brust-Aufnahmedaten, für die das erfindungsgemäße Verfahren im Übrigen prinzipiell ebenfalls anwendbar ist.

Die Richtungsauswahl erfolgt sodann auf Basis der zuvor in der Ortsauswahl ausgewählten Auswahl-Kandidatenorte. Es wird den Auswahl-Kandidatenorten mit anderen Worten mindestens eine Auswahl-Kandidatenrichtung zugeordnet. Es handelt sich also im Endeffekt um eine Orts-Richtungsauswahl, die der Einfachheit halber aber auch im Folgenden grundsätzlich als Richtungsauswahl bezeichnet wird. Durch diese Zuordnung werden jeweils Kandidaten-Tupel gebildet, wobei jedem Auswahl-Kandidatenort auch eine Mehrzahl von Auswahl-Kandidatenrichtungen zugeordnet sein können, woraus sich dann automatisch eine gleich große Mehrzahl an Kandidaten-Tupeln ergibt. Die Durchführung der Richtungsauswahl kann auch in mehreren iterativen Teilschritten erfolgen, wobei die Richtungsauswahl jeweils verfeinert wird, d. h. tendenziell immer weniger, höchstens aber gleich viele, Kandidaten-Tupel nach jedem Teilschritt übrig bleiben.

In 2D-Brust-Aufnahmedaten kann ein (Auswahl-)Kandidatenort durch zwei Koordinatenangaben eines Koordinatensystems mit den beiden prinzipiellen Erstreckungsrichtungen der 2D-Brust-Aufnahme angegeben werden. Bei 3D-Aufnahmen sind hierzu analog drei Koordinatenangaben erforderlich, die sich auf die drei prinzipiellen Erstreckungen des Brust-Aufnahmevolumens beziehen. Eine (Auswahl-)Kandidatenrichtung kann beispielsweise durch einen (in 2D-Brust-Aufnahmedaten) bzw. drei Winkel angegeben werden. Ein Kandidaten-Tupel umfasst daher diese notwendigen Koordinaten- bzw. Richtungsangaben in den 2D-bzw. 3D-Brustaufnahmedaten, wobei anders geartete Koordinatenangaben, die analoge Informationen zu Ort und Richtung umfassen, auch statt der hier erwähnten Koordinaten und Winkel zu seiner Definition verwendet werden können.

Eine bevorzugte, weil einfach anwendbare und instruktive Möglichkeit der Repräsentation der Kandidaten-Tupel besteht in ihrer Beschreibung als Auswahl-Boxen, die mit dem jeweiligen Auswahl-Kandidatenort als Zentrum und in der jeweiligen Auswahl-Kandidatenrichtung ausgerichtet, in die Brust-Aufnahmedaten eingefügt werden. Solche Auswahl-Boxen müssen nicht zwangsläufig quadratisch (was bevorzugt ist) oder zumindest rechteckig ausgebildet sein, theoretisch können auch andere repräsentative Formen wie z.B. Ellipsoide, Zylinder oder lokale Koordinatensysteme, -achsen und -vektoren verwendet werden. Der Begriff "Box" wird hier also allgemein für eine zwei- oder dreidimensionale geometrische Form verwendet, die geeignet ist, den jeweiligen Kandidaten-Tupel hinreichend (d.h. seine wesentlichen Merkmale wie Auswahl-Kandidatenort und Auswahl-Kandidatenrichtung repräsentierend) zu definieren.

Das erfindungsgemäße Verfahren bedient sich des Prinzips des "Marginal Space Learning", wie es etwa für die Herzmodellierung in dem folgenden Artikel beschrieben wird: Zheng, Y. et al.: "Four-Chamber Heart Modeling and Automatic Segmentation for 3D Cardiac CT Volumes Using Marginal Space Learning and Steerable Features." IEEE Trans Med Imaging, 27(11), S. 1668-1681. Dieser Artikel wird als Teil der Offenbarung der vorliegenden Anmeldung angesehen.

Das Marginal Space Learning - Verfahren umfasst drei Schritte zur Bildung von Kandidatentupeln: Erstens wird eine Anzahl an Auswahl-Kandidatenpositionen (gleichbedeutend mit den Auswahl-Kandidatenorten in der hier verwendeten Terminologie) durchgeführt. Auf Basis dessen erfolgt eine Auswahl an Auswahl-Kandidatenorientierungen an diesen Auswahl-Kandidatenorten (analog zu den Auswahl-Kandidatenrichtungen in der hier verwendeten Terminologie) und sodann eine Ähnlichkeitstransformation (eine Skalierung der gewonnenen Tupel). Der letzte Schritt ist im Rahmen der Erfindung nicht zwingend notwendig, wie weiter unten ausgeführt wird.

Ein Detektionssystem der eingangs genannten Art umfasst erfindungsgemäß mindestens:

- eine Eingangsschnittstelle für die Brust-Aufnahmedaten,
- eine Ortsauswahleinheit, die so ausgebildet ist, dass sie eine Ortsauswahl einer limitierten Anzahl von Auswahl-Kandidatenorten innerhalb der Brust-Aufnahmedaten auf Basis lokaler Bildmerkmale in den Brust-Aufnahmedaten durchführt,
- eine Richtungsauswahleinheit, die im Betrieb eine Richtungsauswahl einer limitierten Anzahl von Auswahl-Kandidatenrichtungen an den Auswahl-Kandidatenorten durchführt unter Bildung von Kandidaten-Tupeln mit je einem Auswahl-Kandidatenort und einer Auswahl-Kandidatenrichtung,
- eine Ableitungseinheit zur Ableitung einer Repräsentationslinie und/oder Repräsentationsfläche durch Aggregation der Kandidaten-Tupel.

Die Erfindung umfasst außerdem ein medizintechnisches Aufnahmesystem, umfassend eine Aufnahmeeinheit zur Bildakquisition und ein erfindungsgemäßes Detektionssystem.

Bevorzugt ist das Detektionssystem so ausgebildet, dass es ein erfindungsgemäßes Verfahren vollautomatisch, d. h. selbsttätig, durchführt. Es kann jedoch auch halbautomatisch operieren, d. h. durch zusätzlichen Input von außen, beispielsweise aus weiteren Logikeinheiten, die ggf. mit Datenbanken verknüpft sind, oder durch manuelle Eingaben eines Bedieners, mit notwendigen Zusatzinformationen versorgt werden.

Insgesamt können ein Großteil der Komponenten zur Realisierung des Detektionssystems in der erfindungsgemäßen Weise, insbesondere die Ortsauswahleinheit, die Richtungsauswahleinheit, die Aggregationseinheit und die Ableitungseinheit, ganz oder teilweise in Form von Software-Modulen auf einem Prozessor realisiert werden. Mehrere der Einheiten können auch in einer gemeinsamen Funktionseinheit zusammengefasst sein, insbesondere die Ortsauswahleinheit und die Richtungsauswahleinheit.

Die (erwähnte und ggf. weitere) Schnittstellen müssen nicht zwangsläufig als Hardware-Komponenten ausgebildet sein, sondern können auch als Software-Module realisiert sein, beispielsweise wenn die Brust-Aufnahmedaten von einer bereits auf dem gleichen Gerät realisierten anderen Komponente, wie zum Beispiel einer Bildrekonstruktionsvorrichtung oder dergleichen, übernommen werden können, oder an eine andere Komponente nur softwaremäßig übergeben werden müssen. Ebenso können die Schnittstellen aus Hardware- und Software-Komponenten bestehen, wie zum Beispiel eine Standard-Hardware-Schnittstelle, die durch Software für den konkreten Einsatzzweck speziell konfiguriert wird. Außerdem können mehrere Schnittstellen auch in einer gemeinsamen Schnittstelle, beispielsweise einer Input-Output-Schnittstelle zusammengefasst sein.

Die Erfindung umfasst daher auch ein Computerprogrammprodukt, das direkt in einen Prozessor eines programmierbaren Detektionssystems ladbar ist, mit Programmcode-Mitteln, um alle Schritte des erfindungsgemäßen Verfahrens, wenn das Programmprodukt auf dem Detektionssystem ausgeführt wird.

Weitere besondere vorteilhafte Ausgestaltungen und Weiterbildungen der Erfindung ergeben sich auch aus den abhängigen Ansprüchen sowie der nachfolgenden Beschreibung. Dabei kann das Detektionssystem auch entsprechend den abhängigen Ansprüchen zum Verfahren weitergebildet sein.

Wie bereits erwähnt, hat sich erwiesen dass das von Karssemeijer (s. o.) beschriebene Verfahren auf Basis der Hough-Transformation gute Ergebnisse bei der Bearbeitung von 2D-Brust-Aufnahmedaten bringt. Das erfindungsgemäße Verfahren hingegen ist prinzipiell sowohl für 2D- als auch für 3D-Brust-Aufnahmedaten geeignet. Besondere Vorteile bietet es insbesondere, wenn es innerhalb von 3D-Brust-Aufnahmedaten durchgeführt wird. Hier bietet es nämlich im Vergleich zu seiner Anwendung bei 2D-Brust-Aufnahmedaten eine deutlich höhere Exaktheit und kann zudem als das einzig den Erfindern derzeit bekannte anwendbare Verfahren zur Pektoralmuskelerkennung in DBT Volumen bezeichnet werden.

Bevorzugt wird zur Ortsauswahl und/oder zur Richtungsauswahl ein, insbesondere regelbasierter, Klassifikator verwendet. Dabei handelt es sich besonders bevorzugt um einen Klassifikator mit einer binären Abfragelogik. Die Kandidatenorte und/oder die Kandidatenrichtungen werden also mithilfe einer klassifizierenden Abfragelogik evaluiert und auf Basis dessen die für das Verfahren am besten geeigneten Auswahl-Kandidatenorte bzw. Auswahl-Kandidatenrichtungen ermittelt. Besonders bevorzugt wird für beide Auswahlen, die Ortsauswahl und die Richtungsauswahl jeweils ein Klassifikator verwendet, wobei es sich vorteilhafterweise um denselben Klassifikator handelt. Dies bietet den Vorteil der Durchgängigkeit des Klassifikationsverfahrens und zudem wird das Verfahren weniger kompliziert und dadurch auch weniger aufwändig in der Durchführung. Als binäre Abfragelogik ist im Endeffekt eine Ja/Nein-Abfrage, bezogen auf einen bestimmten Kandidatenort bzw. eine bestimmte Kandidatenrichtung an einem Auswahl-Kandidatenort zu bezeichnen. Es wird also abgefragt, ob oder nicht sich ein Kandidatenort gemäß der Regeln der Abfragelogik als auszuwählen oder nicht auszuwählen erweist. Dieser binären, separierenden, Abfragelogik können wiederum Abfrageschritte vorgeschaltet sein, die zur letztendlich Antwort der Ja/Nein-Abfrage hinleiten.

So kann gemäß einer besonders vorteilhaften, weil effektiven, Ausführungsform der Erfindung die Ortsauswahl und/oder die Richtungsauswahl (bevorzugt wiederum beide) auf Basis von Wahrscheinlichkeitsberechnungen erfolgen. Die der Ja/Nein-Abfrage vorgeschaltete Abfrage umfasst also eine Bestimmung der Wahrscheinlichkeit, mit der ein Kandidatenort bzw. eine Kandidatenrichtung als Auswahl-Kandidatenort bzw. als Auswahl-Kandidatenrichtung geeignet erscheint.

Die nachgeschaltete Ja/Nein-Abfrage kann sodann aus Basis der ermittelten Wahrscheinlichkeiten die Ja/Nein-Entscheidung auf Basis weiterer zugrunde gelegter Regeln treffen. Ein solches Verfahren zeichnet sich dann beispielsweise dadurch aus, dass die Ortsauswahl und/oder die Richtungsauswahl eine Auswahl aller Auswahl-Kandidatenorte und/oder Auswahl-Kandidatenrichtungen umfasst, deren ermittelte Wahrscheinlichkeit oberhalb einem vorab definierten Wahrscheinlichkeitsgrenzwert liegt. Mit anderen Worten handelt es sich bei der Ja/Nein-Entscheidung um ein schwellenwertbasiertes Vorgehen, wobei der Schwellenwert der vorab definierte Wahrscheinlichkeitsgrenzwert ist. Der vorab definierte Wahrscheinlichkeitsgrenzwert kann dabei sowohl absolut gesetzt sein (d. h. ein bestimmter absoluter Wahrscheinlichkeitsgrenzwert wird vorgegeben) oder auch relativ. Im letzteren Falle kann also nur vorgegeben werden, dass der Wahrscheinlichkeitsgrenzwert in Abhängigkeit von einer Wertermittlung aller jeweils ermittelten Wahrscheinlichkeiten während des Verfahrens festgelegt wird. Eine absolute Wertvorgabe des Wahrscheinlichkeitsgrenzwerts hat den Vorteil, dass von vornherein festgelegt ist, welche Wahrscheinlichkeiten noch als hinreichend angesehen werden, um die Kriterien für einen Auswahl-Kandidatenort bzw. eine Auswahl-Kandidatenrichtung zu erfüllen, so dass ein relativ harter Schnitt gezogen wird. Dadurch sind Mindest-Qualitätskriterien für den Wahrscheinlichkeitsgrenzwert festgelegt, die zu einer möglicherweise qualitativ höherwertigen Ja/Nein-Aussage führen können. Dagegen biete die relative Wertvorgabe des Wahrscheinlichkeitsgrenzwerts den Vorteil höherer Flexibilität, d. h. dass auch in Brust-Aufnahmebilddaten mit geringeren Kontrasten immer ausreichend viele Auswahl-Kandidatenorte bzw. Auswahl-Kandidatenrichtungen für die weitere Durchführung des erfindungsgemäßen Verfahrens gefunden werden können.

Eine weitere, alternativ oder ergänzend anwendbare Auswahllogik besteht darin, dass die Ortsauswahl und/oder die Richtungsauswahl eine Auswahl einer vorab definierten Anzahl von Kandidatenorten und/oder einer vorab definierten Anzahl von Kandidatenrichtungen umfasst. Es wird also nicht zwangsläufig ein Schwellenwert mit einer qualitativen Aussage verwendet, sondern stattdessen die Ziel-Anzahl an Auswahl-Kandidatenorten bzw. Auswahl-Kandidatenrichtungen vorgegeben, so dass auch so sichergestellt ist, dass eine für das Verfahren ausreichende Menge an Auswahl-Kandidatenorten bzw. Auswahl-Kandidatenrichtungen zur Verfügung steht.

Als vorteilhafte Anzahl an ausgewählten Auswahl-Kandidatenorten hat sich die Zahl von mindestens 100, bevorzugt mindestens 150, besonders bevorzugt mindestens 180 erwiesen. Andersherum wurde keine Verbesserung der Ergebnisgenauigkeit oberhalb von 300 Auswahl-Kandidatenorten mehr erzielt, weshalb die definierte Anzahl möglich maximal 300, bevorzugt maximal 250, besonders bevorzugt maximal 220 beträgt. Pro Auswahl-Kandidatenort werden dann im Durchschnitt möglichst mindestens 4, bevorzugt mindestens 6, besonders bevorzugt mindestens 8 Auswahl-Kandidatenrichtungen ausgewählt, maximal möglichst 20, bevorzugt maximal 16, besonders bevorzugt maximal 12. In diesen Zahlenbereichen hat sich wiederum eine ausreichende und durch Erhöhung der Anzahl nicht mehr signifikant verbesserbare Ergebnisgenauigkeit ergeben. Bei einer Auswahl von beispielsweise 200 Auswahl-Kandidatenorten mit im Durchschnitt beispielsweise 10 Auswahl-Kandidatenrichtungen ergibt sich eine Anzahl von 10 x 200, also 2.000 Kandidaten-Tupeln.

Als besonders geeignet haben sich Klassifikatoren erwiesen, die einen Algorithmus auf Basis mindestens einer der folgenden Methoden umfassen:

- probablistic boosting tree-Methode
- random forest-Methode.

Die probabilistic boosting tree-Methode ist beispielsweise in dem Artikel Tu, Zhuowen: "Probabilistic Boosting-Tree: Learning Discriminative Models for Classification, Recognition, and Clustering" Proc IEEE Int Conf Comp Vis., S. 1589-1596 (2005) beschrieben, deren Inhalt als Teil der Offenbarung dieser Beschreibung angesehen wird. Diese Methode ist eine Technik des maschinellen Lernens, beispielsweise auf Basis von Haar Wavelets und sogenannten steerable features, mithilfe der aus der hohen Anzahl an möglichen Kandidatenorten eine geringe Auswahlanzahl an Auswahl-Kandidatenorten und analog dazu aus der hohen Anzahl an möglichen Kandidatenrichtungen eine geringe Auswahlanzahl an Auswahl-Kandidatenrichtungen ermittelt werden kann.

Gleiches gilt für die alternativ anwendbare random forest-Methode, die beispielsweise in Breiman L., Random Forests, Machine Learning 45 (1), 2001 beschrieben ist, dessen Inhalt ebenfalls als Teil der Offenbarung dieser Beschreibung angesehen wird.

Weitere Methoden des maschinellen Lernens, insbesondere binäre Klassifikatoren, sind alternativ oder ergänzend anwendbar. Beispielsweise können auch folgende Verfahren bzw. Methoden zur Anwendung kommen:

- support vector machine-Methode
- artificial neural network-Methode
- Gaussian process regression-Methode
- naive Bayes classifier-Methode
- logistic regression-Methode
- linear regression-Methode
- partial least squares-Methode.

All diese Methoden sind dem Fachmann hinreichend bekannt.

Bisher wurde die Bildung der Kandidaten-Tupel beispielhaft mit einer Bildung von Boxen mit einem Mittelpunkt (dem Auswahl-Kandidatenort) und einer Ausrichtung (der Auswahl-Kandidatenrichtung) versinnbildlicht. Die Erfinder haben weiterführend festgestellt, dass unter bestimmten Umständen, insbesondere bei der Auswertung 2D-Brust-Aufnahmedaten, die Hinzuziehung der bereits erwähnten Hough-Transformation (s. o.) deutlich bessere Ergebnisse zeitigt als die reine Anwendung der bisher beschriebenen Methodik des Marginal Space Learning. Mit anderen Worten kann das Marginal Space Learning zusätzlich durch die Methodik der Hough-Transformation sehr gewinnbringend ergänzt werden.

Dabei erfolgt gemäß einer Variante die Ortsauswahl auf Basis einer Anzahl von Linien, welche mittels Hough-Transformation bestimmt werden. Diese Linien (die im Endeffekt als Kandidatenlinien aufgefasst werden können) aus der Hough-Transformation bestimmen bzw. repräsentieren also den Auswahl-Kandidatenort bzw. eine Anzahl an Auswahl-Kandidatenorten.

Alternativ oder ergänzend hierzu sieht eine zweite Variante vor, dass die Richtungsauswahl auf Basis einer Anzahl Linien erfolgt, welche mittels Hough-Transformation bestimmt werden. Da die entsprechenden Linien durch ihre Erstreckung auch eine bestimmte ((Auswahl-)Kandidaten)Richtung aufweisen, können sie nämlich auch Kandidatenrichtungen repräsentieren.

Durch die Verwendung der Hough-Transformation bei Orts- und/oder Richtungsauswahl kann die Verwendung eines Klassifikators in diesem Schritt entfallen. Gleichzeitig hat sich experimentell ergeben, dass diese Ergänzung des Marginal Space Learnings durch die Hough Transformation deutlich bessere Treffergenauigkeiten des Pektoralmuskels ergibt als die reine Anwendung des Marginal Space Learnings an sich.

Eine zusätzliche, sehr erfolgversprechende Weiterbildung des erfindungsgemäßen Verfahrens besteht darin, dass es ein Clustering der Kandidatentupel umfasst. Ein solches Clustering kann insbesondere in Schritt b) und/oder Schritt c), also bei der Richtungsauswahl bzw. bei der Aggregation angewandt werden. Insbesondere kann es z. B. als einer von mehreren iterativen Teilschritten (bevorzugt als der letzte Teilschritt) bei der Richtungsauswahl angewandt werden. Eine andere Möglichkeit besteht darin, die Aggregation in mehrere Teilschritte zu unterteilen, von denen bevorzugt der erste Teilschritt ein Clustering umfasst. Die Funktionsweise des Clusterings und zu möglichen Methoden wird anhand eines Beispiels näher erläutert:

Wie erwähnt, kann die Aggregation in Schritt c) beispielsweise eine Mittelung bzw. eine Medianbildung umfassen. Hieraus kann sich der Nachteil ergeben, dass bei in den Brust-Aufnahmedaten räumlich weit verteilten Kandidaten-Tupeln (beispielsweise mit sogenannten Outliern, also Kandidaten-Tupeln mit signifikanter Abweichung vom Pektoralmuskel) durch eine Mittelung bzw. Median-Bildung eine hieraus abgeleitete Repräsentationslinie bzw. Repräsentationsfläche abgeleitet wird, die trotz der Feinheit des erfindungsgemäßen Verfahrens noch zu ungenau ist: Sie läge irgendwo in der Mitte zwischen mehreren Bereichen, in denen Kandidaten-Tupel vermehrt auftreten und trifft damit mit an Sicherheit grenzender Wahrscheinlichkeit nicht genau genug den tatsächlichen Verlauf des Pektoralmuskels.

Hier wird nun auf Basis eines Clustering-Verfahrens Abhilfe geschaffen: Die mehreren Bereiche, in denen Kandidaten-Tupel vermehrt auftreten, können als Cluster definiert werden und aus diesen Clustern kann ein bestimmter Cluster ausgewählt werden, innerhalb dessen dann ein weiterer Aggregierungs-Teilschritt erfolgt. Das Clustering vor dem abschließenden Aggregierungs-Teilschritt stellt also eine Art Vorauswahl für diesen abschließenden Teilschritt dar und kann das Verfahrensergebnis nochmals erheblich verfeinern.

Besonders bevorzugt erfolgt ein solches Clustering nicht in den Brust-Aufnahmedaten, sondern stattdessen im Hough-Raum. Dies hat sich als deutlich effektiver und zielführender erwiesen.

Es können beim Clustering verschiedene Clustering-Verfahren verwendet werden, beispielsweise eine hierarchische Clusteranalyse, ein k-means clustering oder ein mean-shift clustering. Diese Methoden sind allesamt in Hastie, Trevor / Tibshirani, Robert / Friedman, Jerome: The Elements of Statistical Learning: Data Mining, Inference, and Prediction. beschrieben.

Basis der vorliegenden Erfindung sind insbesondere bevorzugt empirisch ermittelte Trainingsdaten. Mit ihrer Hilfe kann ein maschinenlernendes System eine Basis (eine Ground Truth) bereitstellen, aufgrund derer dann ein Klassifikator Wahrheitswahrscheinlichkeiten in den aktuell zu bearbeitenden Brust-Aufnahmedaten besser evaluieren kann. In solchen Trainingsdaten können also Vorgaben in Form etwa von Erkenntnis-Tupeln an die Hand gegeben werden, wobei die Erkenntnis-Tupel in ihrer Art und Form mit den im Rahmen des Verfahrens zu generierenden Kandidaten-Tupeln korrespondieren, d. h. im Wesentlichen gleich sind. Dabei repräsentiert ein Erkenntnis-Tupel jeweils einen Ort und eine Richtung innerhalb einer menschlichen Brust, deren (Trainings-)Brust-Aufnahmedaten zu Trainingszwecken verwendet wurden. Die Trainings-Brust-Aufnahmedaten wurden dazu - beispielsweise durch Annotation durch einen geübten Befunder - so aufbereitet, dass die Erkenntnis-Tupel jeweils an einem Ort und in einer Ausrichtung (ggf. auch in einer Skalierung) vorliegen, dass sie die Begrenzung des Pektoralmuskels in den Trainings-Brust-Aufnahmedaten mit hoher Wahrscheinlichkeit repräsentieren. Analog können statt Erkenntnis-Tupeln (oder ergänzend hierzu) auch Annotationen in Form von reinen Ergebnis-Orten und/oder Ergebnis-Richtungen und/oder Ergebnis-Skalierungen vorliegen. Diese korrespondieren dann analog zu den oben erwähnten Ergebnis-Tupeln mit den jeweiligen Auswahl-Kandidaten-Orten bzw. Auswahl-Kandidatenrichtungen bzw. auch Auswahl-Kandidatenskalierungen. Es wird somit die Ortsauswahl und/oder die Richtungsauswahl, ggf. auch eine Skalierung, auf Basis einer Datenbank durchgeführt, die empirisch ermittelte Trainingsdaten menschlicher Brüste umfasst. Dies erfolgt besonders bevorzugt im Rahmen der Methodik des Marginal Space Learning, so dass die Trainingsdaten kompatibel mit den Brust-Aufnahmedaten sind, die im Rahmen des erfindungsgemäßen Verfahrens der Detektion des Pektoralmuskels unterzogen werden.

Wie bereits eben angedeutet, kann gemäß einer Variante des erfindungsgemäßen Verfahrens zusätzlich zur Ortsauswahl und der Richtungsauswahl eine Skalierung bzw. Skalierungsauswahl von Auswahl-Boxen durchgeführt werden, die die Kandidaten-Tupel repräsentieren. Allgemeiner kann dem jeweiligen Auswahl-Kandidatenort und einer diesem zugeordneten Auswahl-Kandidatenrichtung, also dem Kandidaten-Tupel noch eine Anzahl möglicher Skalierungen zugeordnet werden. Diese Skalierung(sauswahl) kann im Sinne der oben erwähnten Richtungsauswahl auch als Orts-/Richtungs-/Skalierungsauswahl verstanden werden, wird jedoch wiederum der Einfachheit halber als "Skalierung" bezeichnet. Durch die Skalierung(sauswahl) kann das Verfahren weiter verfeinert werden. Alternativ hierzu kann gemäß einer weiteren Variante vorgesehen sein, dass eine Skalierung von Auswahl-Boxen, die die Kandidaten-Tupel repräsentieren, vordefiniert festgelegt wird. So kann beispielsweise in den Brust-Aufnahmedaten immer dieselbe Auswahl-Box-Größe verwendet werden, beispielsweise eine Größe von 16 x 16 mm +/- 50%, je nach Art der Brust-Aufnahmedaten. Diese Skalierung hat sich im Experiment gut bewährt.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Es zeigen:

Figur 1 eine schematische perspektivische Darstellung einer Mammographie-Einrichtung gemäß dem Stand der Technik,

Figur 2 eine erste Brust-Aufnahme einer menschlichen Brust, mammographisch aufgenommen in MLO-Ausrichtung,

Figur 3 eine zweite Brust-Aufnahme einer menschlichen Brust, mammographisch aufgenommen in MLO-Ausrichtung,

Figur 4 eine dritte Brust-Aufnahme einer menschlichen Brust in Form eines DBT-Bilds,

Figur 5 eine vierte Brust-Aufnahme einer menschlichen Brust in Form eines DBT-Bilds,

Figur 6 erste Trainingsdaten mit eingefügten Annotationen zum Trainings eines Ausführungsbeispiels eines erfindungsgemäßen Detektionssystems,

Figur 7 zweite Trainingsdaten mit eingefügten Annotationen zum Trainings eines Ausführungsbeispiels eines erfindungsgemäßen Detektionssystems,

Figur 8 eine schematische Ablauf-Blockdarstellung eines Ausführungsbeispiels des erfindungsgemäßen Verfahrens,

Figur 9 eine schematische Blockdarstellung eines Ausführungsbeispiels des erfindungsgemäßen Detektionssystems,

Figur 10 erste Brust-Aufnahmedaten mit einem Detektionsergebnis, generiert mithilfe eines Ausführungsbeispiels des erfindungsgemäßen Verfahrens,

Figur 11 zweite Brust-Aufnahmedaten mit einem Detektionsergebnis, generiert mithilfe eines Ausführungsbeispiels des erfindungsgemäßen Verfahrens,

Figur 12 dritte Brust-Aufnahmedaten mit einem Detektionsergebnis, generiert mithilfe eines Ausführungsbeispiels des erfindungsgemäßen Verfahrens,

Figur 13 vierte Brust-Aufnahmedaten mit einem Detektionsergebnis, generiert mithilfe eines Ausführungsbeispiels des erfindungsgemäßen Verfahrens,

Figur 14 fünfte Brust-Aufnahmedaten mit einem Detektionsergebnis, generiert mithilfe eines Ausführungsbeispiels des erfindungsgemäßen Verfahrens,

Figur 15 die fünften Brust-Aufnahmedaten aus Figur 14, transformiert in den Hough-Raum,

Figur 16 die fünften Brust-Aufnahmedaten im Hough-Raum aus Figur 15 nach Durchlaufen eines Clustering-Verfahrens,

Figur 17 die fünften Brust-Aufnahmedaten im Hough-Raum aus den Figur 15 und 16 nach Durchführung eines Auswahl auf Basis des Clustering-Verfahrens,

Figur 18 die fünften Brust-Aufnahmedaten aus Figur 14 nach Durchlaufen des anhand der Figuren 15 bis 17 erläuterten Clustering-Verfahrens.

Die Figuren 1 bis 5 wurden bereits oben bei der Beschreibung des Standes der Technik und der Aufgabenstellung der vorliegenden Erfindung beschrieben.

Figur 6 zeigt ein erstes Beispiel für Trainingsdaten $TD_1$, also Brust-Aufnahmedaten $TD_1$ einer menschlichen Brust, hier DBT-Aufnahmedaten $TD_1$. Zum Training eines Ausführungsbeispiels eines erfindungsgemäßen Detektionssystems wurden die Trainingsdaten $TD_1$ annotiert, nämlich durch einen umfassend geschulten Experten auf dem Gebiet der visuellen Pektoralmuskelerkennung wurde eine Begrenzungslinie 11 eingefügt, die gemäß der Erfahrung des Experten die Begrenzung des Pektoralmuskels 9 hin zur Brust 4 repräsentiert. Entlang der Begrenzungslinie 11 wurden nun quadratische Auswahl-Boxen 1 mit einer Größe von 16 x 16mm einander überlappend angeordnet, wobei die Begrenzungslinie 11 genau in der Mitte der Auswahl-Boxen 1 verläuft. Durch die Begrenzungslinie 11 ist eine (unendliche) Anzahl von Punkten auf der Begrenzungslinie 11 und eine einzige prinzipielle Verlaufsrichtung definiert. Es können daher unendlich viele Auswahl-Boxen 1 je mit einem der Punkte auf der Begrenzungslinie 11 und einer Ausrichtung entlang der prinzipiellen Verlaufsrichtung definierbar. Die hier dargestellten Auswahl-Boxen 1 stellen daher nur das Ergebnis einer systematischen Auswahl dar, da sie äquidistant voneinander, jeweils mit derselben Überlappung entlang der Begrenzungslinie 11 angeordnet sind.

Die Auswahl-Boxen 1 repräsentieren durch ihren jeweiligen Mittelpunkt (dessen 3D-Koordinaten beim Training berücksichtigt werden) und durch ihre prinzipielle Ausrichtung (d. h. ein vorgegebener Winkel im Bild bzw. drei Winkel im Bildraum) Ergebnis-Tupel der Annotation durch den Experten. Diese Ergebnis-Tupel bzw. auch einzelne Koordinaten der Ergebnis-Tupel werden in einer Datenbank hinterlegt, auf Basis derer später das erfindungsgemäße Verfahren durchgeführt werden kann.

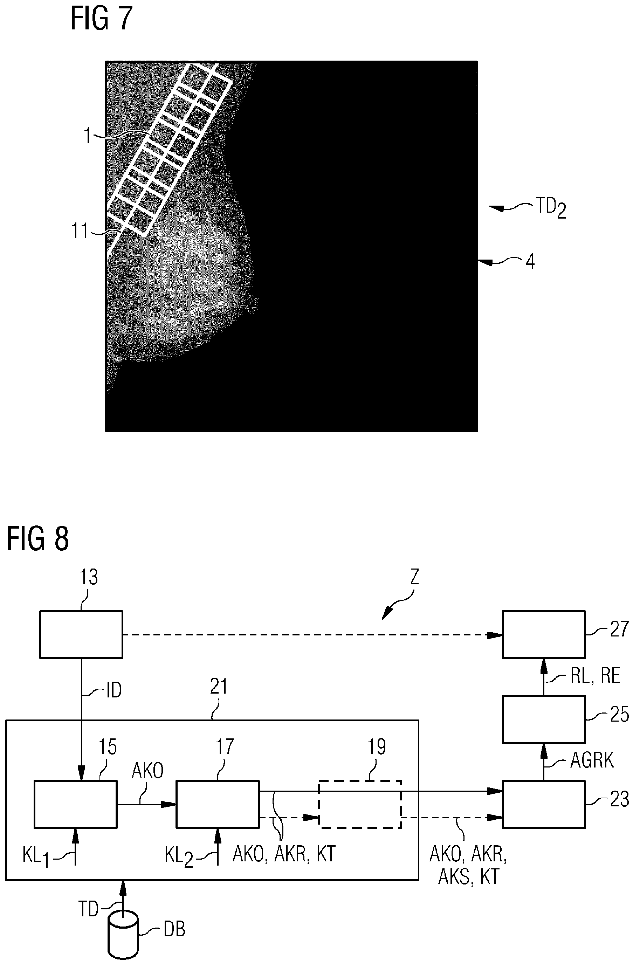

Analog zu den DBT-Daten $TD_1$ aus Figur 6 sind in Figur 7 Brust-Aufnahmedaten $TD_2$ dargestellt, die ebenfalls als (zweite) Trainingsdaten $TD_2$ fungieren und die Mammographie-Daten $TD_2$ sind. Sie sind analog zu dem Vorgehen bei den ersten Trainingsdaten $TD_1$ annotiert, nur mit dem Unterschied, dass zur Positionsbestimmung der Ergebnis-Tupel, die durch die Auswahl-Boxen 1 repräsentiert werden, nun drei Koordinatenangeben (zwei Ortskoordinaten und eine Richtungskoordinate in Form einer Winkelangabe in der Ebene) ausreichen.

Figur 8 zeigt ein schematisches Ablauf-Blockdiagramm zur Erläuterung eines Ausführungsbeispiels eines erfindungsgemäßen Verfahrens Z.

Dabei werden zunächst medizintechnische Brust-Aufnahmedaten ID eines Patienten in einem Input-Schritt 13 eingegeben. Diese Brust-Aufnahmedaten ID umfassen insbesondere bevorzugt DBT-Aufnahmedaten und/oder Mammographiedaten aus einem MLO-Scan.

Mit diesen Brust-Aufnahmedaten ID wird nun in einem Marginal Space Learning-Verfahren 21 Kandidaten-Tupel KT gebildet. Das Marginal Space Learning 21 umfasst eine Orts-Auswahl 15, eine Richtungsauswahl 17 und optional eine Skalierung 19. Es basiert auf Trainingsdaten TD aus einer Datenbank DB, beispielsweise solche Trainingsdaten TD1, TD2 wie sie anhand der beiden Figuren 6 und 7 erläutert wurden.

Innerhalb des Marginal Space Learning-Verfahrens wird also zunächst aus einer Vielzahl an möglichen Kandidatenorten innerhalb der Brust-Aufnahmedaten ID - beispielsweise aller Pixel bzw. Voxel in den Brust-Aufnahmedaten ID - eine Orts-Auswahl 15 durchgeführt, aufgrund derer eine geringere Anzahl an Auswahl-Kandidatenorten AKO identifiziert wird. Dies kann beispielsweise mithilfe eines ersten Klassifikators KL1 erfolgen, zum Beispiel einem probabilistic boosting tree-Klassifikator. $KL_1$. An den Auswahl-Kandidatenorten AKO erfolgt dann die Richtungs-Auswahl 17 auf Basis eines zweiten Klasifikators $KL_2$, der auch (dies ist bevorzugt) auf derselben prinzipiellen Logik basiert, also beispielsweise wiederum ein probabilistic boosting tree-Klassifikator. Hieraus resultieren nun für jeden Auswahl-Kandidatenort AKO eine Anzahl an Auswahl-Kandidatenrichtungen AKR. Jeweils ein Auswahl-Kandidatenort AKO und eine diesem zugeordnete Auswahl-Kandidatenrichtung AKR bilden einen Kandidaten-Tupel KT, der analog zu den Auswahl-Boxen 1 in den Figuren 6 und 7 geometrisch abgebildet werden kann. Die Skalierung dieses Kandidaten-Tupels KT kann im optionalen Skalierungsschritt 19 durchgeführt werden, wodurch sich jeder Kandidaten-Tupel KT dann auch noch durch jeweils eine Auswahl-Kandidatenskalierung AKS definiert. Alternativ hierzu können immer gleich groß skalierte Kandidaten-Tupel KT verwendet werden - analog zu den immer gleich großen Auswahl-Boxen 1 in den Figuren 6 und 7.

Im Schritt 15, kann die Ortsauswahl 15 auch statt der Verwendung des Klassifikators $KL_1$ durch Bildung einer Mehrzahl an Linien mittels Hough-Transformation erfolgen. Auch die Richtungsauswahl 17 kann statt der Verwendung des zweiten Klassifikators KL2 auf Bildung einer Mehrzahl an Linien mittels Hough-Transformation erfolgen. Die jeweiligen Linien repräsentieren in diesem Falle den Auswahl-Kandidatenort AKO und/oder die Auswahl-Kandidatenrichtung AKR. Wird mindestens einer der beiden Auswahlen - die Ortsauswahl 15 und/oder die Richtungsauswahl 17 - mithilfe solcher Linien durchgeführt, kann in Bezug auf das Marginal Space Learning 21 die Rede von einem modifizierten Marginal Space Learning 21 sein. In bestimmten Fällen, insbesondere bei 2D-Brust-Aufnahmedaten ID können mithilfe des modifizierten Marginal Space Learning 21 deutlich bessere, d. h. genauere Detektionsergebnisse des Pektoralmuskels 9 erzielt werden als mit der zuvor beschriebenen (ursprünglicheren) Version des Marginal Space Learnings 21.

Nach dem Marginal Space Learning 21 folgt ein Aggregationsschritt 23, bei dem alle Kandidaten-Tupel KT aggregiert werden. Ggf. kann dabei die Anzahl der Kandidaten-Tupel KT nochmals weiter reduziert werden. Es hat sich nämlich ergeben, dass bei etwa 40 bis 50 vorliegenden Kandidaten-Tupeln KT eine besonders hohe Treffergenauigkeit bei der Detektion erreicht wird. Das aggregierte Tupel beschreibt dann eine Repräsentationslinie RL bzw. eine Repräsentationsfläche RE.

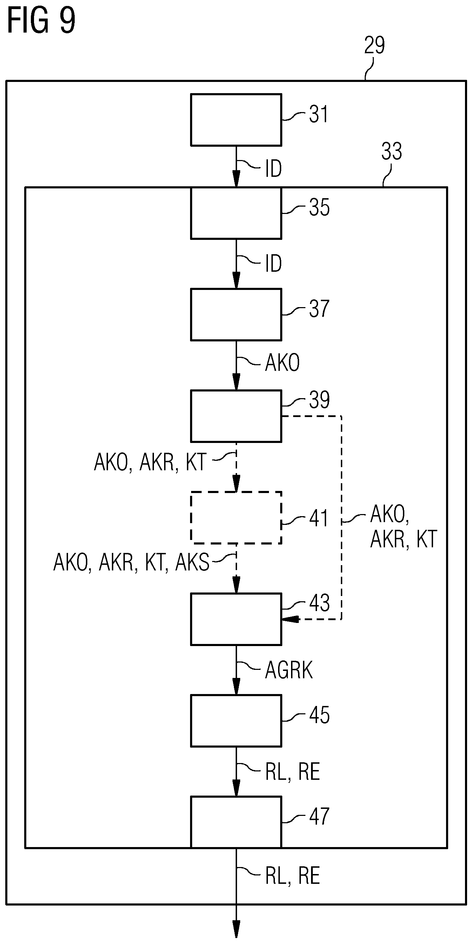

Figur 9 zeigt in schematischer Blockdarstellung ein Ausführungsbeispiel eines erfindungsgemäßen medizintechnischen Aufnahmesystems 29 mit einer Aufnahmeeinheit 31 zur Bildakquisition und einem Ausführungsbeispiel eines erfindungsgemäßen Detektionssystems 33.

Das Detektionssystem 33 umfasst eine Eingangsschnittstelle 35, eine Ortsauswahleinheit 37, eine Richtungsauswahleinheit 39, eine Aggregationseinheit 43, eine Ableitungseinheit 45, eine Ausgangsschnittstelle 47 und optional eine Skalierungseinheit 41.

Aus der Aufnahmeeinheit 31 werden Brust-Aufnahmedaten ID bezogen und über die Eingangsschnittstelle 35 in das Detektionssystem 33 eingespeist. Dort werden sie (vgl. hierzu und zum Folgenden auch Figur 8) einer Ortsauswahl 15 unterzogen, woraus Auswahl-Kandidatenorte AKO resultieren. In der Richtungsauswahleinheit 39 erfolgt dann die Richtungsauswahl 17 der Auswahl-Kandidatenrichtungen AKR und dadurch die Bildung von Kandidaten-Tupeln KT. Analog zum optionalen Schritt 19, der Skalierung 19, ist optional die Skalierungseinheit 41 ausgebildet, woraus sodann Auswahl-Skalierungen AKS resultieren. In der Aggregationseinheit 43 erfolgt der Aggregationsschritt 23. Über die Ausgangsschnittstelle 47 wird die so generierte Repräsentationslinie RL bzw. Repräsentationsfläche RE ausgegeben.

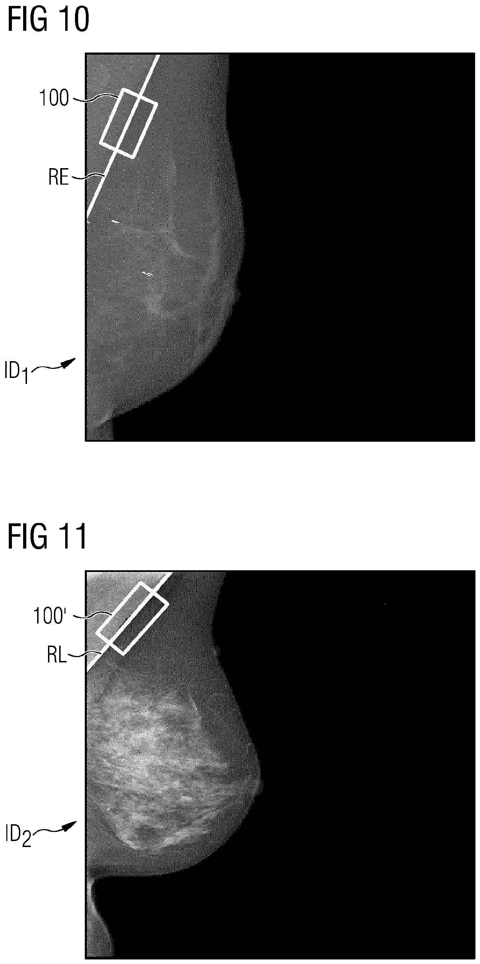

Die Figuren 10 bis 13 zeigen Brust-Aufnahmedaten $ID_1$, $ID_2$, $ID_3$, $ID_4$ in Momentaufnahmen während der Durchführung von verschiedenen Ausführungsformen des Verfahrens.

In Figur 10 sind die (ersten) Brust-Aufnahmedaten $ID_1$ Aufnahmedaten aus einem DBT-Scan, die dem "herkömmlichen" Marginal Space Learning 21 unterzogen werden. Als Ergebnis dieses Marginal Space Learnings 21 und der darauffolgenden Aggregation 23 ist eine längliche Box 100 in das Bild eingefügt, die den ermittelten Verlauf der Begrenzung des Pektoralmuskels 9 repräsentieren. Dieser Verlauf wird aus der länglichen Box 100 in Form der Repräsentationsfläche RE abgeleitet, die mittig innerhalb der Box 100 entlang der Ausrichtungsachse der Box 100 verläuft.

Analog hierzu sind in Figur 11 (zweite) Brust-Aufnahmendaten $ID_2$, nämlich Aufnahmedaten $ID_2$ aus einem Mammographie-Scan in MLO-Ausrichtung gezeigt, die ebenfalls dem "herkömmlichen" Marginal Space Learning 21 unterzogen werden. Analog zur Box 100 ist hier im 2D-Bild ein längliches Viereck 100' aggregiert worden, aus dem analog zu Figur 10 eine Repräsentationslinie RL abgeleitet wurde.

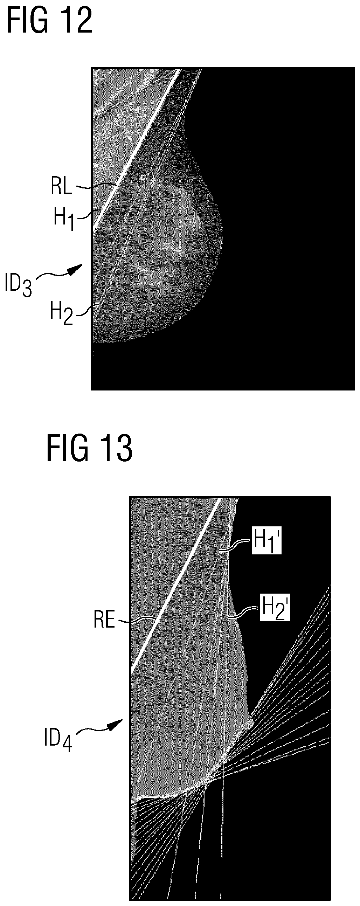

Figur 12 zeigt (dritte) Brust-Aufnahmedaten $ID_3$, wiederum Aufnahmedaten $ID_3$ aus einem Mammographie-Scan in MLO-Ausrichtung sind. In diesem Fall - wie auch im Folgenden - wurde das modifizierte Marginal Space Learning 21 angewandt. Es ist daher in den Brust-Aufnahmedaten ID3 eine Vielzahl an (Kandidaten) Linien $H_1$, $H_2$, ... aus einer Hough-Transformation zu erkennen. Deren Mittelung im Schritt 25 ergibt als Ergebnis die Repräsentationslinie RL.

Analog hierzu ist Figur 13 zu verstehen, nur dass hier wiederum in DBT-Brust-Aufnahmedaten $ID_4$ detektiert wird. Die gezeigten (Kandidaten-) Linien $H_1'$, $H_2'$, ... liegen daher im 3D-Raum verteilt, weshalb sich hier eine deutlich diffusere Verteilung ergibt. Aufgrund der 3-Dimensionalität der Brust-Aufnahmedaten $ID_4$ ist das Resultat der Detektion auch wiederum eine Repräsentationsfläche analog zu Figur 10.

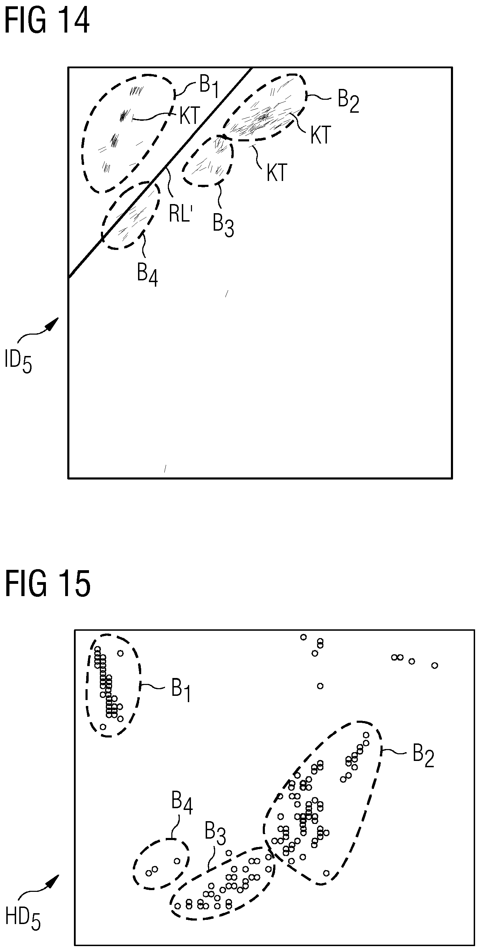

Figur 14 zeigt fünfte Brust-Aufnahmedaten $ID_5$ mit einer Vielzahl an mithilfe eines Ausführungsbeispiels des erfindungsgemäßen Verfahrens ermittelten Kandidaten-Tupeln KT. Es wurde durch Aggregation, nämlich durch Mittelung, der Kandidaten-Tupel KT eine Repräsentationslinie RL' abgeleitet, wie oben ausgeführt. Die Kandidaten-Tupel KT unterteilen sich in verschiedene Bereiche $B_1$, $B_2$, $B_3$, $B_4$. Diese Bereiche $B_1$, $B_2$, $B_3$, $B_4$, liegen diesseits und jenseits der Repräsentationslinie RL'. Kaum einer der Kandidaten-Tupel KT liegt tatsächlich direkt an der Repräsentationslinie RL', was anzeigt, dass wahrscheinlich durch die Mittelung eine Repräsentationslinie RL' gefunden wurde, die nicht genau dem tatsächlichen Verlauf des Pektoralmuskels entspricht. In der Tat ist es so, dass der Pektoralmuskel im ersten, oberen linken Bereich $B_1$ verläuft.

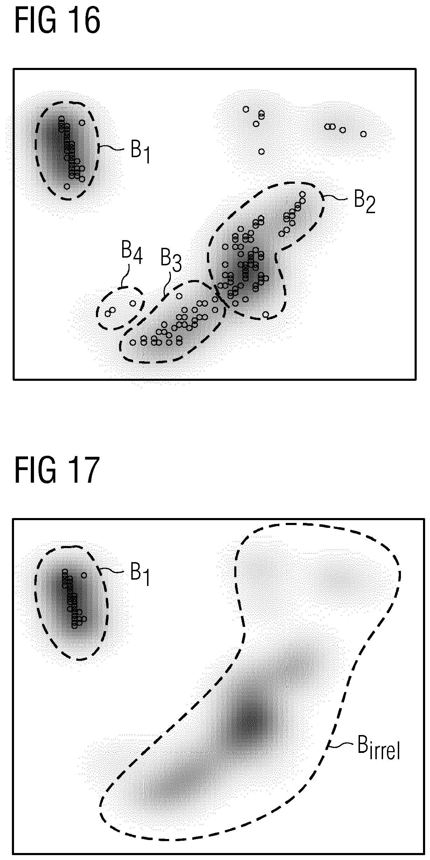

Figur 15 zeigt die fünften Brust-Aufnahmedaten $ID_5$ aus Figur 14, jedoch nun transformiert in den Hough-Raum gemäß der Formel von Shapiro und Stockman (s.o.), so dass es sich nun um Hough-Daten $HD_5$ handelt. Die Bereiche $B_1$, $B_2$, $B_3$, $B_4$ sind nun nochmals besser voneinander abgegrenzt. In Figur 16 werden die Hough-Daten $HD_5$ aus Figur 15 nach Durchlaufen eines Clustering-Verfahrens, bei dem die einzelnen Bereiche $B_1$, $B_2$, $B_3$, $B_4$ ermittelt werden. In einem nächsten Schritt, basierend auf der Methodik des mean-shift clusterings, wird nun das "beste" Cluster ausgewählt. Diese Auswahl basiert auf einer Dichte-Schätzung mit einem Gauss-Kern anhand der Kandidaten-Tupel KT im Hough-Raum. Andere Auswahlkriterien können beispielsweise die Anzahl von in einem Cluster vorhandenen Kandidaten-Tupeln, die Dispersion eines Clusters und die Wahrscheinlichkeiten von Cluster-Kandidaten sein bzw. auch (insbesondere gewichtete) Kombinationen aus diesen Kriterien. Aus dieser Logik wird der erste Bereich $B_1$ als der "beste" Cluster identifiziert und ausgewählt. Die anderen Bereiche $B_2$, $B_3$, $B_4$ werden als irrelevanter Gesamtbereich $B_{irrel}$ bezeichnet.

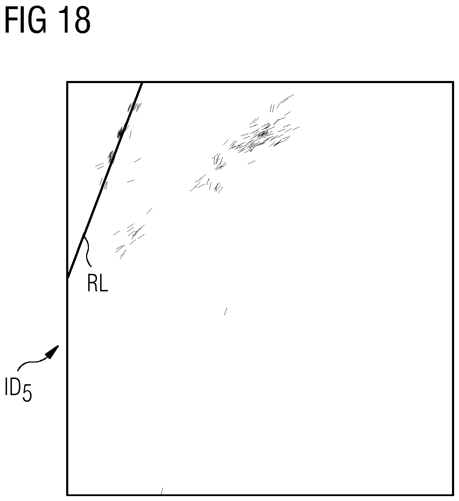

Nach einer Rücktransformation in die fünften Brust-Aufnahmedaten $ID_5$ ergibt sich das in Figur 18 dargestellte Bild, bei dem nun eine verbesserte Repräsentationslinie RL aus dem Cluster des ersten Bereichs B1 gebildet wird. Diese Repräsentationslinie repräsentiert den Pektoralmuskel erheblich feiner und besser als die zuvor generierte, in Figur 14 dargestellte.

Es wird abschließend noch einmal darauf hingewiesen, dass es sich bei dem vorhergehend detailliert beschriebenen Verfahren sowie bei den dargestellten Vorrichtungen lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können.

**Patentansprüche**

1. Verfahren (Z) zur automatischen Detektion eines menschlichen Pektoralmuskels (9) in medizintechnischen Brust-Aufnahmedaten (ID, $ID_1$, $ID_2$, $ID_3$, $ID_4$) eines Patienten (P), mit folgenden Schritten:

   a) Ortsauswahl (15) einer limitierten Anzahl von Auswahl-Kandidatenorten (AKO) innerhalb der Brust-Aufnahmedaten (ID, $ID_1$, $ID_2$, $ID_3$, $ID_4$) auf Basis von Bildmerkmalen in den Brust-Aufnahmedaten (ID, $ID_1$, $ID_2$, $ID_3$, $ID_4$),
   b) Richtungsauswahl (17) einer limitierten Anzahl von Auswahl-Kandidatenrichtungen (AKR) an den Auswahl-Kandidatenorten (AKO) zur Bildung von Kandidaten-Tupeln (KT) mit je einem Auswahl-Kandidatenort (AKO) und einer Auswahl-Kandidatenrichtung (AKR),
   c) Ableitung (25) einer Repräsentationslinie (RL) und/oder Repräsentationsfläche (RE) durch Aggregation der Kandidaten-Tupel (KT).

2. Verfahren gemäß Anspruch 1, **dadurch gekennzeichnet, dass** es innerhalb von dreidimensionalen Brust-Aufnahmedaten ($ID_1$, $ID_4$) durchgeführt wird.

3. Verfahren gemäß Anspruch 1 oder 2, **dadurch gekennzeichnet, dass** zur Ortsauswahl (15) und/oder zur Richtungsauswahl (17) ein Klassifikator ($KL_1$, $KL_2$), insbesondere ein Klassifikator ($KL_1$, $KL_2$) mit einer binären Abfragelogik, verwendet wird.

4. Verfahren gemäß Anspruch 3, **dadurch gekennzeichnet, dass** der Klassifikator ($KL_1$, $KL_2$) einen Algorithmus auf Basis mindestens einer der folgenden Methoden umfasst:

   - probablistic boosting tree-Methode,
   - random forest-Methode,
   - support vector machine-Methode,
   - artificial neural network-Methode,
   - Gaussian process regression-Methode,
   - naive Bayes classifier-Methode
   - logistic regression-Methode
   - linear regression-Methode
   - partial least squares-Methode.

5. Verfahren gemäß einem der vorhergehenden Ansprüche, **dadurch gekennzeichnet, dass** die Ortsauswahl (15) und/oder die Richtungsauswahl (17) auf Basis einer Wahrscheinlichkeitsberechnung erfolgt.

6. Verfahren gemäß Anspruch 5, **dadurch gekennzeichnet, dass** die Ortsauswahl (15) und/oder die Richtungsauswahl (17) eine Auswahl aller Auswahl-Kandidatenorte (AKO) und/oder Auswahl-Kandidatenrichtungen (AKR) umfasst, deren ermittelte Wahrscheinlichkeit oberhalb einem vorab definierten Wahrscheinlichkeitsgrenzwert liegt.

7. Verfahren gemäß einem der vorhergehenden Ansprüche, **dadurch gekennzeichnet, dass** die Ortsauswahl (15) und/oder die Richtungsauswahl (17) eine Auswahl einer vorab definierten Anzahl von Kandidatenorten und/oder einer vorab definierten Anzahl von Kandidatenrichtungen umfasst.

8. Verfahren gemäß einem der vorhergehenden Ansprüche, **dadurch gekennzeichnet, dass** die Ortsauswahl (15) und/oder die Richtungsauswahl (17) auf Basis einer Anzahl von Linien ($H_1$, $H_2$, $H_1'$, $H_2'$) erfolgt, welche mittels Hough-Transformation bestimmt werden.

9. Verfahren gemäß einem der vorhergehenden Ansprüche, **dadurch gekennzeichnet, dass** es ein Clustering der Kandidatentupel (KT) umfasst.

10. Verfahren gemäß einem der vorhergehenden Ansprüche, **dadurch gekennzeichnet, dass** die Ortsauswahl (15) und/oder die Richtungsauswahl (17) auf Basis einer Datenbank (DB) durchgeführt wird, die empirisch ermittelte Trainingsdaten (TD, $TD_1$, $TD_2$) menschlicher Brüste umfasst.

11. Verfahren gemäß einem der vorhergehenden Ansprüche, **dadurch gekennzeichnet, dass** zusätzlich zur Ortsauswahl (15) und der Richtungsauswahl (17) eine Skalierung von Auswahl-Boxen (1) durchgeführt wird, die die Kandidaten-Tupel (KT) repräsentieren.

12. Verfahren gemäß einem der Ansprüche 1 bis 10, **dadurch gekennzeichnet, dass** eine Skalierung von Auswahl-Boxen (1), die die Kandidaten-Tupel (KT) repräsentieren, vordefiniert festgelegt wird.

13. Detektionssystem (33) zur automatischen Detektion eines menschlichen Pektoralmuskels (9) in medizintechnischen Brust-Aufnahmedaten (ID, $ID_1$, $ID_2$, $ID_3$, $ID_4$) eines Patienten (P), mindestens umfassend:

   - eine Eingangsschnittstelle (35) für die Brust-Aufnahmedaten (ID, $ID_1$, $ID_2$, $ID_3$, $ID_4$),
   - eine Ortsauswahleinheit (37), die so ausgebildet ist, dass sie eine Ortsauswahl (15) einer limitierten Anzahl von Auswahl-Kandidatenorten (AKO) innerhalb der Brust-Aufnahmedaten (ID, $ID_1$, $ID_2$, $ID_3$, $ID_4$) auf Basis lokaler Bildmerkmale in den Brust-Aufnahmedaten (ID, $ID_1$, $ID_2$, $ID_3$, $ID_4$) durchführt,
   - eine Richtungsauswahleinheit (39), die im Betrieb eine Richtungsauswahl (17) einer limitierten Anzahl von Auswahl-Kandidatenrichtungen (AKR) an den Auswahl-Kandidatenorten (AKO) durchführt unter Bildung von Kandidaten-Tupeln (KT) mit je einem Auswahl-Kandidatenort (AKO) und einer Auswahl-Kandidatenrichtung (AKR),
- eine Ableitungseinheit (45) zur Ableitung (25) einer Repräsentationslinie (RL) und/oder Repräsentationsfläche (RE) durch Aggregation der Kandidaten-Tupel (KT).

14. Medizintechnisches Aufnahmesystem (29), umfassend eine Aufnahmeeinheit (31) zur Bildakquisition und ein Detektionssystem (33) gemäß Anspruch 13.

15. Computerprogrammprodukt, das direkt in einen Prozessor eines programmierbaren Detektionssystems (33) ladbar ist, mit Programmcode-Mitteln, um alle Schritte eines Verfahrens gemäß einem der Ansprüche 1 bis 12 auszuführen, wenn das Programmprodukt auf dem Detektionssystem (33) ausgeführt wird.

**Claims**

1. Method (Z) for the automatic detection of a human pectoral muscle (9) in medical-technical breast recording data (ID, $ID_1$, $ID_2$, $ID_3$, $ID_4$) of a patient (P), comprising the following steps:

   a) Location selection (15) of a limited number of selection candidate locations (AKO) within the breast recording data (ID, $ID_1$, $ID_2$, $ID_3$, $ID_4$) based on image features in the breast recording data (ID, $ID_1$, $ID_2$, $ID_3$, $ID_4$),
   b) Direction selection (17) of a limited number of selection candidate directions (AKR) at the selection candidate locations (AKO) to form candidate tuples (KT) each with one selection candidate location (AKO) and one selection candidate direction (AKR),
   c) Derivation (25) of a representation line (RL) and/or representation surface (RE) by way of aggregation of the candidate tuples (KT).

2. Method according to claim 1, **characterised in that** the method is carried out within three-dimensional breast recording data ($ID_1$, $ID_4$).

3. Method according to claim 1 or 2, **characterised in that** a classifier ($KL_1$, $KL_2$), in particular, a classifier ($KL_1$, $KL_2$) with a binary query logic is used for location selection (15) and/or direction selection (17).

4. Method according to claim 3, **characterised in that** the classifier ($KL_1$, $KL_2$) comprises an algorithm based on at least one of the following methods:

   - probabilistic boosting tree method,
   - random forest method,
   - support vector machine method,
   - artificial neural network method,
   - Gaussian process regression method,
   - Naive Bayes classifier method,
   - logistic regression method,
   - linear regression method,
   - partial least squares method.

5. Method according to one of the preceding claims, **characterised in that** the location selection (15) and/or the direction selection (17) is made based on a probability calculation.

6. Method according to claim 5, **characterised in that** the location selection (15) and/or the direction selection (17) comprises a selection of all selection candidate locations (AKO) and/or selection candidate directions (AKR), the determined probability of which lies above a predefined probability limit value.

7. Method according to one of the preceding claims, **characterised in that** the location selection (15) and/or the direction selection (17) comprises a selection of a predefined number of candidate locations and/or a predefined number of candidate directions.

8. Method according to one of the preceding claims, **characterised in that** the location selection (15) and/or the direction selection (17) is made based on a number of lines ($H_1$, $H_2$, $H_1'$, $H_2'$), which are determined by means of Hough transform.

9. Method according to one of the preceding claims, **characterised in that** the method comprises a clustering of the candidate tuples (KT).

10. Method according to one of the preceding claims, **characterised in that** the location selection (15) and/or the direction selection (17) is carried out based on a database (DB) which comprises empirically determined training data (TD, $TD_1$, $TD_2$) of human breasts.

11. Method according to one of the preceding claims, **characterised in that** in addition to location selection (15) and the direction selection (17), a scaling of selection boxes (1) is carried out which represent the candidate tuples (KT).

12. Method according to one of claims 1 to 10, **characterised in that** a scaling of selection boxes (1) which represent the candidate tuples (KT) is determined on a predefined basis.

**13.** Detection system (33) for the automatic detection of a human pectoral muscle (9) in medical-technical breast recording data (ID, $ID_1$, $ID_2$, $ID_3$, $ID_4$) of a patient (P), comprising at least:

- an input interface (35) for the breast recording data (ID, $ID_1$, $ID_2$, $ID_3$, $ID_4$),
- a location selection unit (37) which is embodied such that it performs a location selection (15) of a limited number of selection candidate locations (AKO) within the breast exposure data (ID, $ID_1$, $ID_2$, $ID_3$, $ID_4$) based on local image features in the breast exposure data (ID, $ID_1$, $ID_2$, $ID_3$, $ID_4$),
- a direction selection unit (39) which, during operation, performs a direction selection (17) of a limited number of selection candidate directions (AKR) at the selection candidate locations (AKO) to form candidate tuples (KT) each with one selection candidate location (AKO) and one selection candidate direction (AKR),
- a derivation unit (45) for the derivation (25) of a representation line (RL) and/or a representation surface (RE) by way of aggregation of the candidate tuples (KT).

**14.** Medical-technical recording system (29), comprising a recording unit (31) for image acquisition and a detection system (33) according to claim 13.

**15.** Computer program product which can be directly loaded into a processor of a programmable detection system (33), which contains program code means for performing all steps of a method according to one of claims 1 to 12 when the program product is run on the detection system (33).


**Revendications**

**1.** Procédé (Z) de détection automatique d'un muscle (9) pectoral humain dans des données (ID, $ID_1$, $ID_2$, $ID_3$, $ID_4$) d'enregistrement de la poitrine d'un patient (P) en technique médicale, comprenant les stades :

a) sélection (15) d'emplacement d'un nombre limité d'emplacements (AKO) candidats à la sélection dans les données (ID, $ID_1$, $ID_2$, $ID_3$, $ID_4$) d'enregistrement de la poitrine sur la base de caractéristiques d'image dans les données (ID, $ID_1$, $ID_2$, $ID_3$, $ID_4$) d'enregistrement de la poitrine,
b) sélection (17) de direction d'un nombre limité de directions (AKR) candidates à la sélection aux emplacements (AKO) candidats à la sélection, pour former des multiplets (KT) candidats, ayant chacun un emplacement (AKO) candidat à la sélection et une direction (AKR) candidate à la sélection,
c) déduction (25) d'une ligne (RL) de représentation et/ou d'une surface (RE) de représentation par agrégation des multiplets (KT) candidats.

**2.** Procédé suivant la revendication 1, **caractérisé en ce qu'**il est effectué dans des données ($ID_1$, $ID_4$) d'enregistrement de la poitrine en trois dimensions.

**3.** Procédé suivant la revendication 1 ou 2, **caractérisé en ce que**, pour la sélection (15) d'emplacement et/ou pour la sélection (17) de direction, on utilise un classificateur ($KL_1$, $KL_2$), notamment un classificateur ($KL_1$, $KL_2$) ayant une logique d'interrogation binaire.

**4.** Procédé suivant la revendication 3, **caractérisé en ce que** le classificateur ($KL_1$, $KL_2$) comprend un algorithme sur la base d'au moins l'une des méthodes suivants :

- méthode prababilistic boosting tree,
- métode random forest,
- méthode support vector machine,
- méthode à réseau neuronal artificiel,
- méthode de régression par processus Gaussien,
- méthode de classificateur de Bayes naive,
- méthode de régression logistique,
- méthode de régression linéaire,
- méthode aux moindres carrés partielle.

**5.** Procédé suivant l'une des revendications précédentes, **caractérisé en ce que** la sélection (15) d'emplacement et/ou la sélection (17) de direction s'effectue sur la base d'un calcul de probabilité.

**6.** Procédé suivant la revendication 5, **caractérisé en ce que** la sélection (15) d'emplacement et/ou la sélection (17) de direction comprend une sélection de tous les emplacements (AKO) candidats à la sélection et/ou de toutes les directions (AKR) candidates à la sélection, dont la probabilité, qui a été déterminée, est supérieure à une valeur limite de probabilité définie à l'avance.

**7.** Procédé suivant l'une des revendications précédentes, **caractérisé en ce que** la sélection (15) d'emplacement et/ou la sélection (17) de direction comprend une sélection d'un nombre défini à l'avance d'emplacements candidats et/ou d'un nombre défini à l'avance de directions candidates.

**8.** Procédé suivant l'une des revendications précédentes, **caractérisé en ce que** la sélection (15) d'emplacement et/ou la sélection (17) de direction s'effectuent sur la base d'un nombre de lignes ($H_1$, $H_2$,

H$_1$', H$_2$'), qui sont déterminées au moyen d'une transformation de Hough.

9. Procédé suivant l'une des revendications précédentes, **caractérisé en ce qu'**il comprend un regroupement des multiplets (KT) candidats.

10. Procédé suivant l'une des revendications précédentes, **caractérisé en ce que** l'on effectue la sélection (15) d'emplacement et/ou la sélection (17) de direction sur la base d'une base (DB) de données, qui comprend des données (TD, TD$_1$, TD$_2$) d'apprentissage déterminées empiriquement de poitrines humaines.

11. Procédé suivant l'une des revendications précédentes, **caractérisé en ce qu'**en plus de la détection (15) d'emplacement et/ou de la détection (17) de direction, on effectue une mise à l'échelle de boîtes (1) de sélection, qui représentent les multiplets (KT) candidats.

12. Procédé suivant l'une des revendications 1 à 10, **caractérisé en ce que** l'on fixe, de manière définie à l'avance, une mise à l'échelle de boîtes (1) de sélection, qui représente les multiplets (KT) candidats.

13. Système (33) de détection pour détecter automatiquement un muscle (9) pectoral humain dans des données (ID, ID$_1$, ID$_2$, ID$_3$, ID$_4$) d'enregistrement de poitrine (P) en technique médicale, comprenant au moins :

    - une interface (35) d'entrée des données (ID, ID$_1$, ID$_2$, ID$_3$, ID$_4$) d'enregistrement de poitrine,
    - une unité (37) de sélection d'emplacement, constituée de manière à effectuer une sélection (15) d'emplacement d'un nombre limité d'emplacements (AKO) candidats à la sélection dans les données (ID, ID$_1$, ID$_2$, ID$_3$, ID$_4$) d'enregistrement de poitrine sur la base de caractéristiques d'images locales dans les données (ID, ID$_1$, ID$_2$, ID$_3$, ID$_4$) d'enregistrement de poitrine,
    - une unité (39) de sélection de direction, qui effectue, en fonctionnement, une sélection (17) de direction d'un nombre limité de directions (AKR) candidates à la sélection sur les emplacements (AKO) candidats à la sélection avec formation de multiplets (KT) candidats, ayant chacun un emplacement (AKO) candidat à la sélection et une direction (AKR) candidate à la sélection,
    - une unité (45) de déduction, pour déduire (25) une ligne (RL) de représentation et/ou une surface (RE) de représentation par agrégation des multiplets (KT) candidats.

14. Système (29) d'enregistrement en technique médicale, comprenant une unité (31) d'enregistrement pour l'acquisition d'images et un système (33) de détection suivant la revendication 13.

15. Produit de programme d'ordinateur, qui peut être chargé directement dans un processeur d'un système (33) de détection programmable, comprenant des moyens de code de programme pour effectuer tous les stades d'un procédé suivant l'une des revendications 1 à 12, lorsque le produit de programme est réalisé sur le système (33) de détection.

FIG 1 Stand der Technik

FIG 2 Stand der Technik

FIG 3   Stand der Technik

FIG 4   Stand der Technik

## FIG 5  Stand der Technik

## FIG 6

## FIG 7

## FIG 8

# FIG 9

## FIG 10

## FIG 11

## FIG 12

## FIG 13

## FIG 14

B₁

KT

B₂

KT

KT

RL'

B₃

B₄

ID₅

## FIG 15

B₁

B₂

B₄

B₃

HD₅

FIG 16

FIG 17

FIG 18

RL

ID5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9843201 A

**In der Beschreibung aufgeführte Nicht-Patentliteratur**

- Automatic Identification of the Pectoral Muscle in Mammograms. **BORGES R. A. et al.** IEEE Transactions on Medical Imaging. IEEE Service Center, 01. Februar 2004, vol. 23, 232-245
- A Novel Pectoral Muscle Segmentation Algorithm Based on Polyline Fitting and Elastic Thread Approaching. **WEIDONG XU et al.** Proceedings of ICBBE 2007. IEEE, 01. Juli 2007, 837-840
- **KARSSEMEIJER, N.** Automated classification of parenchymal patterns in mammograms. *Phys Med Biol,* 1998, vol. 43 (2), 365-378
- **SHAPIRO ; STOCKMAN.** Computer Vision. 2001
- Segmentation of the Pectoral Muscle Boundary in Breast MR Images. **MYUNGEUN LEE et al.** Bioinformatics and Bioengineering (BIBE), 2011 IEEE 11th International Conference on Bioinformatics and Bioengineering. IEEE, 24. Oktober 2011, 323-326
- **ZHENG, Y. et al.** Four-Chamber Heart Modeling and Automatic Segmentation for 3D Cardiac CT Volumes Using Marginal Space Learning and Steerable Features. *IEEE Trans Med Imaging,* vol. 27 (11), 1668-1681
- **TU, ZHUOWEN.** Probabilistic Boosting-Tree: Learning Discriminative Models for Classification, Recognition, and Clustering. *Proc IEEE Int Conf Comp Vis.,* 2005, 1589-1596
- **BREIMAN L.** *Random Forests, Machine Learning,* 2001, vol. 45 (1